Europäisches Patentamt

(19) **European Patent Office**

**Office européen des brevets**

(11) Publication number: **0 169 699**

**A1**

(12) # EUROPEAN PATENT APPLICATION

(21) Application number: **85305043.3**

(22) Date of filing: **15.07.85**

(51) Int. Cl.⁴: **F 16 D 23/12**
**G 05 G 3/00**

(30) Priority: **13.07.84 GB 8417887**

(43) Date of publication of application:
**29.01.86 Bulletin 86/5**

(84) Designated Contracting States:
**BE DE FR GB IT NL SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Barton, Laurence George Herbert**
**15 Pleasant Way Leamington Spa**
**Warwickshire CV32 5XA(GB)**

(74) Representative: **Adkins, Michael et al,**
**Withers & Rogers 4 Dyer's Buildings**
**Holborn London, EC1N 2JT(GB)**

(54) **Latching release fork.**

(57) The release mechanism comprises a release bearing 16 and a release member 8 for applying release forces to the bearing. Positioning of the release member is effected by relative movement of the release member axially of the bearing from a first position to a second position. In the first position a finger 24 of the release member engages a projection 18 on an outer race 16a of the bearing and on movement from the first to the second position the release member pivots angularly into a position in which a second finger 25 thereof can apply force to the projection 18 to release the clutch.

./...

EP 0 169 699 A1

Croydon Printing Company Ltd.

## A RELEASE MECHANISM FOR A
## PULL-TYPE FRICTION CLUTCH

The invention relates to a release mechanism for a pull-type friction clutch in which a release member moves the bearing away from the clutch driven plate to release the clutch and to a method of locating a release member. Such mechanisms are frequently used for operating friction clutches of motor vehicles.

A problem associated with pull-type clutches is that, for example, with a diaphragm spring clutch the release bearing must be fitted to the centre of the diaphragm spring prior to fitting the clutch on to the engine flywheel. This sometimes leads to difficulties in feeding the release member, typically a fork-like lever, into its operating position after fitting the clutch to the flywheel.

An object of the present invention is to provide a release mechanism which facilitates easier feeding of the release member into its operating position.

According to one aspect of the invention there is provided a method of locating a release member for a pull-type friction clutch relative to a release bearing comprising effecting relative movement between the bearing and the release member substantially axially of the bearing between first and second positions in which second position release forces can be applied to said release bearing, characterised

by, causing in said first relative position a portion of said release member to engage location means associated with said release bearing and turning the release member through an angle by further relative movement towards the second position so that the release forces can be applied by the release member to the release bearing through said location means.

Preferably the method includes causing a second portion of said release member to align with said location means in said second position whereby release forces can be applied to the release bearing by said second portion. The method may include providing a projection on said release bearing to define said location means, and arranging said first and second portions of the release member so that a space is defined therebetween , which space receives the projection during the angular movement of the release member.

Preferably the second portion clears the location means during said relative movement towards the second axial position and said first portion engages the location means.

The method may include providing said release member with elongate said first and second portions with the elongate first portion terminating at a free end radially further from a centre of turning of the release member than the free end of the elongate second portion.

According to another aspect of the invention there is provided a release mechanism for a pull-type friction clutch comprising a release bearing and a release member for applying release forces to said bearing, positioning of said release member to operate the clutch being effected by relative movement between the bearing and the release member substantially axially of said bearing from a first position to a second position, said release member having a portion which in the first axial position engages location means associated with the release bearing and which on effecting said relative movement causes the release member to turn through an angle into a position in which release forces can be transmitted from the release member to the bearing through said location means.

Preferably the release member includes a second portion through which release forces are transmitted to the bearing, a space being defined between said first and second portions of the release member.

The release member may include an arm, the said portion of the release member being arranged at or adjacent one end of the arm. The opposite end of the arm may be rotatably fast with a shaft which can be turned by means such as a hydraulic slave cylinder. The arm may therefore operate as a lever to release the clutch.

The aforesaid first and second portions may comprise respective first and second spaced fingers on the arm. The space may be elongate and may extend longitudinally of the arm. Preferably the first finger is longer than the second finger and in the first relative position the second finger is spaced from said surface associated with the release bearing.

Preferably the location means is a projection fast with a race of the release bearing which race, in use, does not rotate, the release member in the first relative position engaging one peripheral section of said projection and in the second relative position being arranged to transmit release forces through a substantially opposite peripheral section of the projection. Where the release member has first and second fingers defining a space therebetween, the projection may be received in said space as a result of the angular movement.

Where the release member includes an arm, two such arms may be provided to form a fork-like release member.

A release mechanism in accordance with the invention will now be described by way of example with reference to the accompanying drawings in which:

Fig.1 is a cross section through a friction clutch of a motor vehicle incorporating a release mechanism in accordance with the invention in a partly assembled condition;

Fig.2 is a view similar to Fig.1 showing the release mechanism in a fully assembled condition; and

Fig.3 is a plan view of the release mechanism in Fig.1.

A friction clutch 9 comprises a pressure plate 10 which is normally biased by a diaphragm spring 12 so as to grip a driven plate 13 between the pressure plate and an engine flywheel. The driven plate 13 is, in use, splined to a drive input shaft (not shown) for a gearbox.

A release mechanism 15 comprises a clutch release bearing 16 of known kind, having an inner race (not shown) axially fast with a hub 17 of the diaphragm spring 12 and /an outer race 16a fast with two diametrically opposed cylindrical projections 18. The outer race 16a does not rotate during rotation of the clutch spring.

A release fork 8 (constituting the aforesaid release member) comprises two arms 19 rotatably fast with a shaft 22 which is pivotally mounted on a bell housing 23. The bell housing 23 has a tubular extension 23a over which the inner race of the release bearing can slide during clutch release and re-engagement movements.

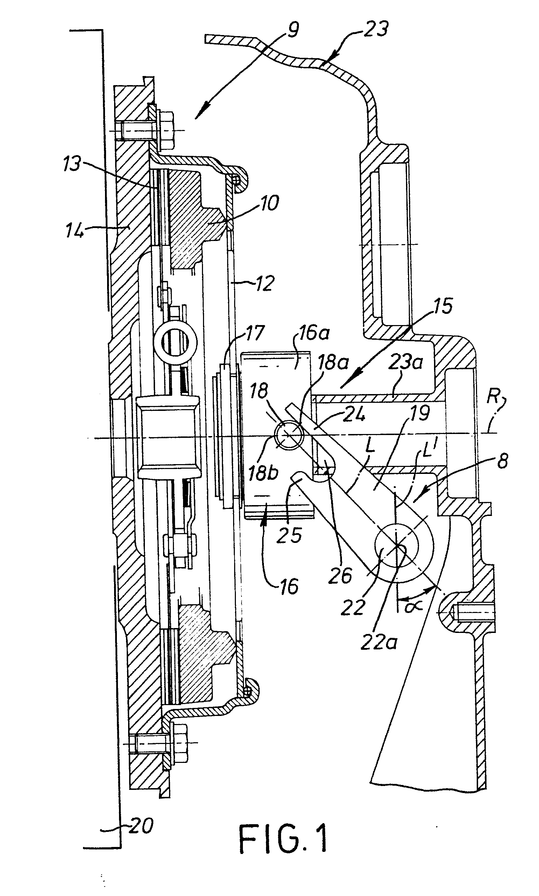

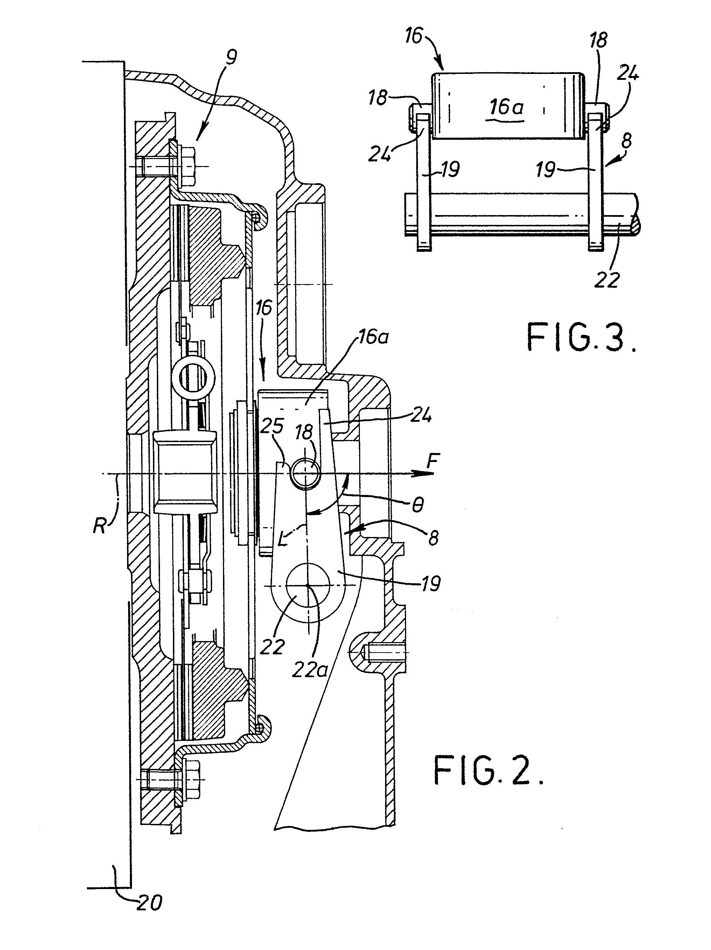

The shaft 22 may project from one side of the bell housing and is rotatably fast with an arm (not shown) co-operable, e.g. with the usual slave cylinder of a hydraulic clutch control system. Each arm 19 has a free end formed with two fingers 24,25 which define an elongate space or recess 26 therebetween extending longitudinally of the arm. The width of the space 26 corresponds substantially to the diameter of the adjacent projection 18 so that the projection can lie in the space as explained below with reference to Fig.2. The finger 24 is considerably longer than the finger 25. Fig.1 shows the bell housing 23 axially spaced from an end surface of the engine 20 during assembly.

With pull-type friction clutches, the assembly of the bell housing and engagement of the release fork with release members fast with the release bearing can present difficulties. However, the present invention simplifies assembly as described below.

When aligning the bell housing 23 with the engine, the fitter ensures that the longer finger 24 of each arm 19 initially rests against a surface portion 18a of the associated projection 18 as in Fig.1. Once those parts are interengaged, the fitter simply slides the bell housing axially towards the engine (the finger 25 clearing projections 18) so that the projections 18 cause the arms 19 to turn through an angle $\alpha$ (around 45° in the example shown) about the axis 22a of shaft 22. The line L' in Fig. 1 represents the position of line L in the Fig. 2 position. The angular movement effectively reduces the distance between the projections 18 and and shaft 22 and causes the fingers to slide relative to the projections 18 so that each of the latter lies within the space or recess 26 of its associated arm as shown in Fig.2. The bell housing 23 is then bolted to the engine 20 and the gearbox (not shown) can be attached to the bell housing.

Clutch release forces are transmitted to the diaphragm spring 12 by rotating the shaft 22 clockwise as viewed in Figs. 1 and 2 by means of the aforesaid slave cylinder so that release forces are transmitted through fingers 25 to the projections 18, and thence via the release bearing 16 to the spring hub 17. The release forces are applied to surface portions 18b of the respective projections 18 opposite to surface portions 18a initially engaged by the fingers 24. In the example shown, a line L passing through axis 22a and the axis of associated projection 18 is substantially perpendicular to the axis of rotation R of the clutch 9. In cases where the angle $\Theta$ (Fig.2) is less than 90° it will be necessary to leave sufficient space between the radially inner end of the recess 26 and the projection 18 to accommodate movement of that inner end towards the projection during clockwise clutch release movement of the arm 19 up to the 90° position. There will normally be a slight working clearance between the radially inner end of recess 26 and the projection 18 even where the angle $\Theta$ is 90°.

0169699

To disengage the arms 19 and projections 18, the bell housing 23 is detached from the engine and moved axially to the right beyond the Fig.2 position.

It will be appreciated that the invention permits location of the arms 19 on the projections 18 by a simple axial movement of the bell housing. To simplify assembly further, suitable positioning means may be provided to ensure that the arms 19 naturally adopt the Fig.1 position when the bell housing is detached from the engine. The fitter then simply has to push the bell housing into position without having to control the angle of the arms.

CLAIMS:

1. A method of locating a release member (8) for a pull-type friction clutch relative to a release bearing (16) comprising effecting relative movement between the bearing (16) and the release member (8) substantially axially of the bearing between first and second positions in which second position release forces (F) can be applied to said release bearing characterised by causing in said first relative position a portion (24) of said release member (8) to engage location means (18) associated with said release bearing (14) and turning the release member (8) through angle ($\alpha$) by relative movement towards the second position so that the release forces can be applied by the release member to the release bearing through said location means.

2. A method according to Claim 1 characterised by causing a second portion (25) of said release member (8) to align with said location means (18) in said second position whereby release forces (f) can be applied to the release bearing by said second portion.

3.    A method according to Claim 2 characterised by providing a projection (18) on said release bearing (16) to define said location means, and arranging said first and second portions (24,25) of the release member (8) so that a space (26) is defined therebetween        which space receives the projection (18) during the angular movement of the release member (8).

4.    A method according to Claim 2 or 3 characterised by causing the second portion (25) of the release member (8) to clear said location means (18) during relative movement towards the second axial position.

5.    A method according to Claim 2, 3 or 4 characterised by providing said release member (8) with elongate said first and second portions (24,25) with the elongate first portion (24) terminating at a free end radially further from a centre of turning (22a) of the release member than the free end of the elongate second portion (25).

6.   A release mechanism for a pull type friction clutch comprising a release bearing (16) and a release member (8) for applying release forces (F) to said bearing, positioning of said release member to operate the clutch being effected by relative movement between the bearing and the release member substantially axially of said bearing from a first position to a second position characterised in that said release member has a portion (24) which in the first axial position engages location means (18a) associated with the release bearing (16) and which on effecting said relative movement causes the release member (8) to turn through an angle ($\propto$) into a position in which release forces (F) can be transmitted from the release member to the bearing through said location means.

7.   A release mechanism according to Claim 6 characterised in that the release member (8) includes a second portion (25) through which release forces (F) are transmitted to the bearing (16), a space (26) being defined between said first and second portions (24,25) of the release member.

8.   A release mechanism according to Claim 6 or 7 characterised in that the release member (8) includes an arm (19), said portion (24) of the release member being arranged at or adjacent one end of the arm.

9. A release mechanism according to Claim 7 or 8 characterised in that where the release member (8) includes a second portion (25), the first and second portions comprise respective first and second spaced fingers (24,25)

10. A release mechanism according to Claim 9 characterised in that the space (26) between the fingers is elongate and extends longitudinally of the arm (19).

11. A release mechanism according to Claim 9 or 10 characterised in that the first finger (24) is longer than the second finger (25) and in the first relative position the second finger (25) is spaced from said surface (18) associated with the release bearing (16).

12. A release mechanism according to any of Claims 6 to 11 characterised in that the location means is a projection (18) fast with a race (16a) of the release bearing (16) which race, in use, does not rotate, the release member (8) in the first relative position engaging one peripheral section (18a) of said projection and in the second relative position being arranged to transmit release forces through a substantially opposite peripheral section (18b) of the projection.

13. A release mechanism according to Claim 12 characterised in that where the release member (8) has first and second fingers (24,25) defining a space (29) therebetween, the projection (18) is received in said space as a result of the angular movement.

14. A release mechanism according to any of Claims 6 to 13 characterised in that where the release member (18) includes an arm (19), two such arms are provided to form a fork-like release member.

FIG.1

FIG.3.

FIG.2.

## EUROPEAN SEARCH REPORT

**European Patent Office**

0169699

Application number

EP 85 30 5043

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 044 691 (AUTOMOTIVE PRODUCTS) * Whole document * | 1,2,4,6 | F 16 D 23/12<br>G 05 G 3/00 |
| Y | | 3,7-10,12-14 | |
| Y | DE-C- 883 535 (FLENDER & CO.) * Whole document * | 3,7-10,12-14 | |
| A | GB-A- 262 523 (RUSHTON) | | |

| | | | TECHNICAL FIELDS SEARCHED (Int. Cl.4) |
|---|---|---|---|
| | | | F 16 D 23/00<br>F 16 D 25/00<br>G 05 G |

The present search report has been drawn up for all claims

| Place of search | Date of completion of the search | Examiner |
|---|---|---|
| THE HAGUE | 16-09-1985 | BALDWIN D.R. |